# EUROPÄISCHE PATENTSCHRIFT

(11) **EP 2 089 182 B1**
(45) Veröffentlichungstag und Bekanntmachung des Hinweises auf die Patenterteilung: **22.06.2011**
(21) Anmeldenummer: 07803332.1
(22) Anmeldetag: 07.09.2007
(51) Int. Cl.: B23Q 11/06, B23D 47/00, B27G 19/02

(54) **SCHUTZVORRICHTUNG**
PROTECTIVE DEVICE
DISPOSITIF DE PROTECTION

(30) Priorität: 13.10.2006 DE 102006048560
(43) Veröffentlichungstag der Anmeldung: 19.08.2009
(73) Patentinhaber: Robert Bosch GmbH, 70442 Stuttgart (DE)
(72) Erfinder: MARX, Klaus, 70563 Stuttgart (DE); KOEDER, Thilo, 70839 Gerlingen (DE); PLATZER, Joachim, 71686 Remseck-Hochberg (DE)
(86) Internationale Anmeldenummer: PCT/EP2007/059389
(87) Internationale Veröffentlichungsnummer: WO 2008/043625

(56) Entgegenhaltungen:
- EP-A- 1 491 304
- DE-A1- 19 716 035
- DE-B1- 2 347 256
- DE-U1- 9 406 662

## Beschreibung

### Stand der Technik

Die Erfindung geht aus von einer Schutzvorrichtung nach dem Oberbegriff des Anspruchs 1.

Es ist bereits eine Schutzvorrichtung, insbesondere für Tischkreissägen mit einem rotierenden, scheibenförmigen Sägewerkzeug, bekannt (siehe z. B. die Patentdokumente WO-A-03/006213, US-A-2002/0170399 und GB-1,180,458), die eine Aktoreinheit und eine Schutzeinheit aufweist. Die Aktoreinheit ist bei einer akuten Gefahr für einen Rediener dazu vorgesehen, das Werkzeug- zu blockieren oder mittels pyrotechnischer Einheiten vom Bediener zu entfernen.

Die DE 94 06 662 U1 offenbart eine Schutzvorrichtung, insbesondere für Tischkreissägen mit einem Werkzeug, das von einem rotierenden scheibentörmigen Sagewerkzeug gebildet ist, mit einer Zugfeder und Seitenwänden. Die Zugfeder wirkt dem Gewicht der Abdeckhaube entgegen Die Abdeckhaube liegt während des Betriebs an einem Werkstück an.

Zweck der DE 23 47 256 B1 ist es, die Absaugung von Sägespänen zu verbessern. Hierzu lehrt die DE 23 47 256 B1, an einer Abdeckhaube einer Kreissäge eine Schürze anzubringen, welche aus einer Mehrzahl vertikal und gegeneinander verschiebbarer Segmente besteht.

Die DE 197 16 035 A1 offenbart eine Tischkreissäge mit einer Schutzhaube und einer Aktoreinheit, die beim Erkennen einer 1 land vor dem Sägeblatt das Sägeblatt mitsamt Motor nach unten zieht.

Bei der EP-A 1491304 verhält es sich ähnlich wie bei der DE 94 06 662 U1 und DE 23 47 256 B1, wobei ein Bügel ebenfalls während des Betriebs am Werkstück anliegt.

### Vorteile der Erfindung

Die Erfindung geht aus von einer Schutzvorrichtung, insbesondere für Tischkreissägen mit einem Werkzeug, das von einem rotierenden scheibenförmigen Sägewerkzeug gebildet ist, mit wenigstens einer Aktoreinheit und zumindest einer Schutzeinheit.

Es wird vorgeschlagen, dass die Aktoreinheit dazu vorgesehen ist, die Schutzeinheit in eine Schutzposition am Werkzeug- zu bewegen, wodurch ein vorteilhafter Schutz für einen Bediener einer Werkzeugmaschine, insbesondere einer Tischkreissäge, mit einer Schutzvorrichtung erreicht werden kann. Die Aktoreinheit ist dabei vorzugsweise dazu vorgesehen, eine Gefahr, wie beispielsweise einen unmittelbar bevorstehenden Kontakt des Bedieners und/oder eines weiteren menschlichen oder tierischen Lebewesens mit dem Werkzeug, insbesondere einem Sägewerkzeug, zu erkennen und bei einer akuten Gefahr die Schutzeinheit innerhalb eines kurzen Zeitraums, der vorteilhafterweise maximal 15 ms und bevorzugterweise maximal 10 ms beträgt, zumindest teilautomatisch in die Schutzposition zu bringen. Vorteilhafterweise weist die Schutzvorrichtung zwei Schutzeinheiten auf, wobei jeweils eine der Schutzeinheiten einen Schutz für einen Bediener an einer scheibenförmigen, parallel zu einer Haupterstreckungsfläche des Werkzeugs ausgerichteten Seite des Werkzeugs ermöglicht, wie beispielsweise an einem Kreissägenblatt. In diesem Zusammenhang soll unter einer "Schutzposition" insbesondere eine Position und/oder eine Stellung der Schutzeinheit verstanden werden, die einen Bediener der Werkzeugmaschine mit einer Schutzvorrichtung bzw. weitere menschliche oder tierische Lebewesen bei einer akuten Gefahr vor einem Kontakt mit dem Werkzeug, insbesondere einem Sägewerkzeug, schützt bzw. einen Kontakt mit dem Werkzeug nahezu unmöglich macht.

Des Weiteren wird vorgeschlagen, dass die Handwerkzeugmaschine eine obere Werkzeugabdeckung aufweist, in der die Schutzeinheit angeordnet ist, wodurch eine konstruktiv einfache Anordnung der Schutzeinheit innerhalb der Schutzvorrichtung erreicht werden kann. Vorzugsweise ist die Schutzeinheit in einer Warteposition komplett innerhalb der oberen Werkzeugabdeckung angeordnet, so dass hiermit eine unerwünschte Behinderung eines Betriebs der Werkzeugmaschine durch die Schutzeinheit der Schutzvorrichtung vorteilhaft vermieden werden kann. Dabei soll unter einer "oberen Werkzeugabdeckung" insbesondere eine Schutzeinheit für eine Tischkreissäge verstanden werden, die zumindest teilweise in eine Umfangsrichtung um ein rotierendes, scheibenförmiges Werkzeug, insbesondere ein scheibenförmiges Sägeblatt, angeordnet ist und dabei fest mit einem Tisch der Tischkreissäge verbunden ist. Zudem ist die obere Werkzeugabdeckung in einer normalen Betriebsposition der Tischkreissäge zumindest teilweise oberhalb des Sägewerkzeugs angeordnet, wobei die obere Werkzeugabdeckung einen uneingeschränkten Betrieb der Werkzeugmaschine ermöglicht.

Vorteilhafterweise weist die Schutzeinheit mehrere nebeneinander angeordnete Schutzelemente auf, wodurch die Schutzposition der Schutzeinheit besonders flexibel gestaltet werden kann. Zusätzlich hierzu ist eine einfache Anordnung der einzelnen Schutzelemente, insbesondere innerhalb der oberen Werkzeugabdeckung, möglich.

Ferner wird vorgeschlagen, dass die Aktoreinheit zumindest ein Spannmittel aufweist, das die Schutzeinheit in zumindest einer Betriebsposition vorspannt, wobei die Betriebsposition vorzugsweise von einer Warteposition gebildet ist. Hierdurch kann vorteilhaft eine Energie, insbesondere eine Bewegungsenergie der Schutzeinheit, im Spannmittel gespeichert und somit ein schneller Wechsel der Schutzeinheit bzw. der einzelnen Schutzelemente der Schutzeinheit von der Betriebsposition, die von einer Warteposition gebildet ist, in die Schutzposition erreicht werden. Vorzugsweise ist das Spannmittel von einem Energiespeicher und/oder besonders vorteilhaft von einem Federmittel gebildet und/oder von weiteren, dem Fachmann als sinnvoll erscheinenden Spannmitteln.

In einer weiteren Ausgestaltung der Erfindung wird vorgeschlagen, dass die Aktoreinheit zumindest eine Sensoreinheit aufweist, wodurch eine Erkennung einer akuten Gefahr für einen Bediener mittels der Sensoreinheit erreicht werden kann, wie beispielsweise mittels eines von einer Kamera gebildeten Sensormittels und/oder weiteren, dem Fachmann als sinnvoll erscheinenden Sensormitteln. Vorzugsweise ist die Sensoreinheit dazu vorgesehen, bei einer akuten Gefahr für einen Bediener oder für ein weiteres menschliches oder tierisches Lebewesen eine Vorspannung der Schutzeinheit zu lösen, so dass die Schutzeinheit aus einer ersten, vorgespannten Betriebsposition in eine weitere Betriebsposition, wie beispielsweise in eine Schutzposition, gebracht werden kann. Dabei soll unter einer "Sensoreinheit" insbesondere eine Einheit verstanden werden, die neben einem Sensormittel zum Detektieren einer akuten Gefahr für einen Bediener vorzugsweise zusätzliche Einheiten aufweist, wie beispielsweise eine Steuer- und/oder eine Auswerteeinheit zum Auswerten der detektierten Daten und/oder zum Betätigen und/oder Aktivieren weiterer Funktionen, so dass zumindest ein teilweise automatisches und besonders vorteilhaft ein vollautomatisches Lösen der Vorspannung bzw. eines Haltemittels für die Schutzeinheit durch die Sensoreinheit erzielt werden kann.

Des Weiteren wird vorgeschlagen, dass die Aktoreinheit zumindest eine Arretierungseinheit aufweist, die die Schutzeinheit in der Schutzposition arretiert, wodurch ein besonders stabiler und robuster Schutz für einen Bediener bzw. für weitere menschliche oder tierische Lebewesen erreicht werden kann, wie beispielsweise bei einem Sturz des Bedieners auf das Werkzeug, insbesondere auf das rotierende und scheibenförmige Sägewerkzeug. Vorzugsweise ist die Arretierung der Schutzeinheit für einen Bediener lösbar angeordnet, so dass die Schutzeinheit bzw. die einzelnen Schutzelemente innerhalb der oberen Werkzeugabdeckung reversibel, ohne Bauteile auszutauschen bzw. zu ersetzen, wieder in eine von einer Warteposition gebildete Betriebsposition vorgespannt werden können.

Vorteilhafterweise ist die Arretiereinheit innerhalb der oberen Werkzeugabdeckung angeordnet, wodurch eine kompakte Bauweise der Schutzvorrichtung erreicht werden kann.

Die Schutzelemente sind lamellenartig ausgebildet, wodurch ein Blockieren der gesamten Schutzeinheit durch ein zu bearbeitendes Werkstück im Bereich des Werkzeugs, wie beispielsweise des rotierenden und scheibenförmigen Sägewerkzeugs, bei einem Ausfahren bzw. einem Ausklappen der Schutzelemente vermieden werden kann. Besonders vorteilhaft kann dies erreicht werden, wenn die Schutzelemente unabhängig voneinander bewegbar angeordnet sind. Die lamellenartigen Schutzelemente sind dabei vorzugsweise aus einem Material mit einer hohen Stabilität gebildet, das vorteilhaft auch Impulsstöße abfangen kann, wie beispielsweise aus einer Stahllegierung, aus einem Carbonfasermaterial etc.

Die Handwerkzeugmaschine weist eine Lagereinheit auf, die die Schutzelemente in zumindest eine Bewegungsrichtung lagert, die von einem Werkzeug, insbesondere einem rotierenden und scheibenförmigen Werkzeug wegführt, wodurch Objekte, die sich in Richtung des Werkzeugs bewegen, wie insbesondere Körperteile eines menschlichen oder tierischen Lebewesens, vorteilhaft vom Werkzeug weggedrückt werden können und somit eine Gefahr einer Verletzung zumindest reduziert werden kann. Vorzugsweise führt die Bewegung der Schutzelemente im Bereich zwischen einer Schneidkante des Werkzeugs und einem Bediener bzw. einem sich in Richtung des Werkzeugs bewegenden Objekt zweckmäßigerweise von der Schneidkante weg, so dass ein Kontakt des Bedieners mit dem Sägewerkzeug vorteilhaft verhindert werden kann.

### Zeichnung

Weitere Vorteile ergeben sich aus der folgenden Zeichnungsbeschreibung. In der Zeichnung ist ein Ausführungsbeispiel der Erfindung dargestellt.

Es zeigen:
- Fig. 1: eine von einer Tischkreissäge gebildete Werk- zeugmaschine mit einer erfindungsgemäßen Schutzvorrichtung, die vorgespannte Schutzele- mente aufweist, in einer perspektivischen An- sicht,
- Fig. 2: die Tischkreissäge aus Figur 1 in einer per- spektivischen Ansicht mit der erfindungsgemä- ßen Schutzvorrichtung in einer Schutzposition,
- Fig. 3: die Tischkreissäge aus Figur 1 in einer per- spektivischen Ansicht mit der erfindungsgemä- ßen Schutzvorrichtung in einer teilweisen Schutzposition,
- Fig. 4: einen Teilbereich der Schutzvorrichtung aus Figur 1 und
- Fig. 5: einen Teilschnitt durch Figur 4 entlang der Linie V-V.

### Beschreibung des Ausführungsbeispiels

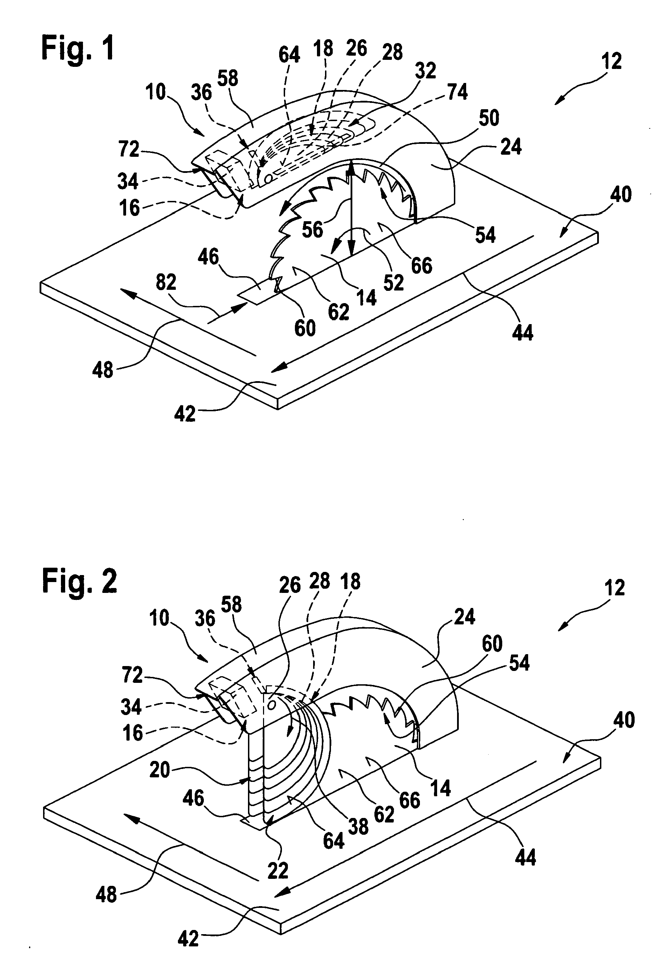

In den Figuren 1 bis 3 ist eine von einer Tischkreissäge 12 gebildete Werkzeugmaschine dargestellt, die eine erfindungsgemäße Schutzvorrichtung 10 aufweist. Die Tischkreissäge 12 umfasst neben der Schutzvorrichtung 10 ein rotierendes und scheibenförmiges, von einem Kreissägeblatt gebildetes Werkzeug 14 und einen Kreissägentisch 40. Der Kreissägentisch 40 umfasst eine Tischplatte 42 und ein nicht näher dargestelltes Tragemittel, das die Tischplatte 42 trägt. Die Tischplatte 42 weist zu einer Aufnahme des scheibenförmigen Werkzeugs 14 eine längliche Ausnehmung 46 auf, die sich in eine Haupterstreckungsrichtung 44 der Tischplatte 42 erstreckt. Zudem ist die Ausnehmung 46 entlang einer senkrecht zur Haupterstreckungsrichtung 44 sich erstreckenden Querrichtung 48 der Tischplatte 42 mittig in der Tischplatte 42 angeordnet. In der Ausnehmung 46 ist das scheibenförmige Werkzeug 14 angeordnet, wobei eine Haupterstreckungsfläche 66 des Werkzeugs 14 senkrecht zur Tischplatte 42 ausgerichtet ist. Das Werkzeug 14 ist mittels einer nicht näher dargestellten Sägewerkzeugaufhängung befestigt, die in einer normalen Betriebsstellung der Tischkreissäge 12 unterhalb der Tischplatte 42 angeordnet ist.

Um das Werkzeug 14 ist in eine Umfangsrichtung 50 teilweise die Schutzvorrichtung 10 in einer normalen Betriebsstellung der Tischkreissäge 12 an einer Oberseite der Tischplatte 42 angeordnet. Die Schutzvorrichtung 10 umfasst eine von einer oberen Werkzeugabdeckung 24 ausgebildete Schutzeinheit. Die obere Werkzeugabdeckung 24 ist mit der Tischplatte 42 fest verbunden und erstreckt sich von der Tischplatte 42 aus in Rotationsrichtung 52 des Werkzeugs 14 um einen Teilbereich 54 des Werkzeugs 14. Der Teilbereich 54 erstreckt sich ca. 90° kreissegmentförmig um das Werkzeug 14 bzw. von der Tischplatte 42 aus bis zu einem Bereich des Werkzeugs 14, der eine maximale Höhe 56 gegenüber der Tischplatte 42 aufweist. Ferner bildet der Teilbereich 54 anschließend eine parallel zu der Tischplatte 42 verlaufende Abdeckung 58. Die obere Werkzeugabdeckung 24 weist dabei die Form eines nach innen, in Richtung des Werkzeugs 14 offenen Torus auf, der eine Schneidkante 60 des Werkzeugs 14 schützend umgibt (Figuren 1 bis 3).

Des Weiteren umfasst die Schutzvorrichtung 10 eine Aktoreinheit 16 und zwei weitere Schutzeinheiten 18, 20. Die zwei weiteren Schutzeinheiten 18, 20 und die Aktoreinheit 16 sind innerhalb der parallel zur Tischplatte 42 verlaufenden Abdeckung 58 der torusartigen, oberen Werkzeugabdeckung 24 angeordnet. Die zwei weiteren Schutzeinheiten 18, 20 sind zum Schutz eines Bedieners vor dem Werkzeug 14 vorgesehen und sind hierzu parallel zu jeweils einer der beiden Seitenflächen 62 des Werkzeugs 14 angeordnet. Zudem weisen die Schutzeinheiten 18, 20 jeweils mehrere Schutzelemente 26, 28 auf, die lamellenartig nebeneinander angeordnet sind (Figuren 1 bis 5). Die Schutzelemente 26, 28 weisen eine im Wesentlichen halbkreisförmige, ringsegmentartige Form auf, wobei eine Haupterstreckungsfläche 64 der Schutzelemente 26, 28 jeweils parallel zur Haupterstreckungsfläche 66 des scheibenförmigen Werkzeugs 14 ausgerichtet ist.

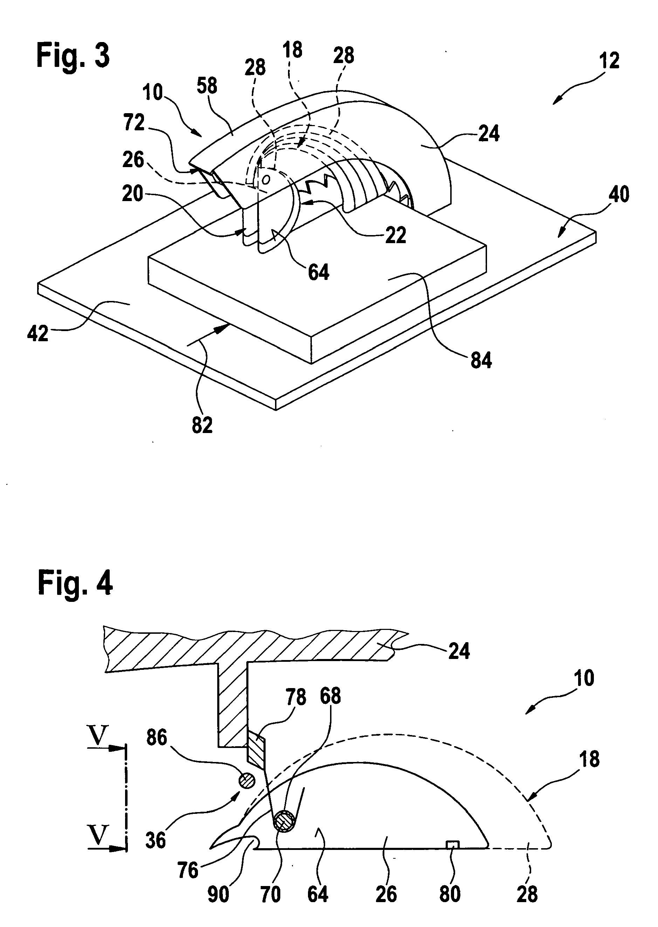

Die einzelnen Schutzelemente 26, 28 der beiden weiteren Schutzeinheiten 18, 20 weisen jeweils eine kreisförmige Ausnehmung 68 auf, in der eine von einer Achse gebildete Lagereinheit 70 angeordnet ist, auf der die einzelnen Schutzelemente 26, 28 jeweils drehbar gelagert sind. Die Lagereinheit 70 ist mit der oberen Werkzeugabdeckung 24 fest verbunden und in einem vorderen Frontbereich 72 der oberen Werkzeugabdeckung 24, der einem Bediener der Tischkreissäge 12 zugewandt ist, und senkrecht zur Haupterstreckungsfläche 66 des scheibenförmigen Werkzeugs 14 angeordnet. In einer ersten Betriebsposition 32 der Schutzelemente 26, 28 sind diese innerhalb der oberen Werkzeugabdeckung 24 durch eine magnetische Halterung 74 befestigt und durch ein Spannmittel der Aktoreinheit 16 vorgespannt (Figuren 1 und 4). Das Spannmittel weist für jede der beiden weiteren Schutzeinheiten 18, 20 ein von einer Schenkelfeder gebildetes Federmittel 76 auf (Figur 4). Grundsätzlich sind jedoch auch weitere, dem Fachmann als sinnvoll erscheinende Federmittel 76, die ein Drehmoment auf die Schutzelemente 26, 28 übertragen, und/oder sinnvoll erscheinende Spannmittel in einer alternativen Ausgestaltung der Erfindung denkbar. Die Federmittel 76 spannen die Schutzelemente 26, 28 innerhalb des Frontbereichs 72 der oberen Werkzeugabdeckung 24 vor, wobei jeweils nur ein erstes Schutzelement 26 der jeweiligen Schutzeinheit 18, 20 vorgespannt ist. Die Federmittel 76 weisen an einem Ende jeweils ein stegförmiges Halteelement 78 auf, mit dem sich die Federmittel 76 an der oberen Werkzeugabdeckung 24 abstützen. Mit dem anderen Ende bzw. mit einer Torsionsspirale sind die Federmittel 76 mit dem jeweiligen Schutzelement 26 befestigt (Figur 4). Die weiteren Schutzelemente 28 werden durch die magnetische Halterung 74 in der ersten Betriebsposition 32 gehalten. Die Federmittel 76 sind zwischen der Lagereinheit 70 und dem jeweiligen Schutzelement 26 an dem Schutzelement 26 angeordnet.

Zudem weist die Aktoreinheit 16 eine Sensoreinheit 34 auf, die in der oberen Werkzeugabdeckung 24 angeordnet ist. Die Sensoreinheit 34 umfasst ein von einer Kamera gebildetes Sensormittel und eine Steuereinheit. Die Kamera detektiert im Betrieb der Schutzvorrichtung 10 einen Bereich von ca. 1 cm bis 2 cm um das Werkzeug 14 der Tischkreissäge 12. Mithilfe der Steuereinheit und des Sensormittels wird ein unmittelbar bevorstehender Kontakt des Bedieners mit dem Werkzeug 14 erkannt. Die Steuereinheit steuert die magnetische Halterung 74, so dass bei einem erkannten und unmittelbar bevorstehender Kontakt des Bedieners mit dem Werkzeug 14 die magnetische Halterung 74 der durch das Spannmittel bzw. durch die Federmittel 76 vorgespannten Schutzelemente 26, 28 von der Steuereinheit gelöst wird. Durch eine Spannkraft des Federmittels 76 werden die Schutzelemente 26, 28 aus der ersten Betriebsposition 32 herausbewegt und in eine zweite, von einer Schutzposition 22 gebildete Betriebsposition gebracht.

Um einen maximalen Schutz eines Bedieners bereitzustellen bzw. um einen Kontakt des Bedieners mit dem Werkzeug 14 zu vermeiden, werden die Schutzelemente 26, 28 innerhalb von etwa 10 ms ab einem Zeitpunkt der Detektion in die Schutzposition 22 gebracht. Das erste Schutzelement 26 wird dabei durch die Spannkraft des Federmittels 76 bewegt, die weiteren Schutzelemente 28 einer Schutzeinheit 18, 20 werden durch ein Mitnahmeelement 80, das die einzelnen Schutzelemente 26, 28 mit den direkt daneben angeordneten Schutzelementen 26, 28 verbindet, in die Schutzposition 22 bewegt. Dabei weisen die Schutzelemente 26, 28 eine Bewegungsrichtung 38 auf, die parallel zur Haupterstreckungsfläche 66 des Werkzeugs 14 verläuft. Die Schutzelemente 26, 28 werden dabei um die Lagereinheit 70 bewegt, wobei eine Drehrichtung der Schutzelemente 26, 28 um die Lagereinheit 70 der Rotationsrichtung 52 des Werkzeugs 14 entgegengerichtet ist. Zusätzlich weisen die Schutzelemente 26, 28 im Bereich der Schneidkante 60 des Werkzeugs 14 eine Bewegungsrichtung 38 auf, die einer Einschubrichtung 82 eines Werkstücks 84 entgegengerichtet ist, so dass beispielsweise ein Körperteil eines Bedieners durch die Schutzelemente 26, 28 von dem Werkzeug 14 weggedrückt wird (Figuren 2 und 3).

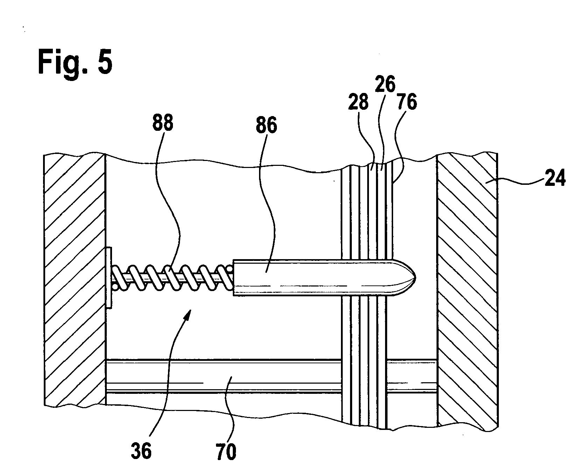

Befindet sich kein zu bearbeitendes Werkstück 84 im Sägebereich des Werkzeugs 14, werden durch Lösen der magnetischen Halterung 74 alle Schutzelemente 26, 28 in die Schutzposition 22 gebracht (Figur 2). Um die Schutzelemente 26, 28 in der Schutzposition 22 stabil zu halten und somit einen wirksamen Schutz für einen Bediener zu erreichen, werden die Schutzelemente 26, 28 in der Schutzposition 22 arretiert. Dadurch bilden die beiden Schutzeinheiten 18, 20 jeweils eine seitliche, parallel zur Haupterstreckungsfläche 66 des Werkzeugs 14 verlaufende Verschalung des Werkzeugs 14, die aufgrund der Anordnung in einem dem Bediener zugewandten Bereich der Schneidkante 60 einen Kontakt des Bedieners mit der Schneidkante 60 des Werkzeugs 14 verhindert. Hierzu weist die Aktoreinheit 16 eine Arretiereinheit 36 auf, die im Frontbereich 72 innerhalb der oberen Werkzeugabdeckung 24 angeordnet ist. Die Arretiereinheit 36 weist für jeweils eine Schutzeinheit 18, 20 ein bolzenförmiges Arretiermittel 86 auf, das über ein Federelement 88 an der oberen Werkzeugabdeckung 24 gelagert ist (Figur 5). Zum Arretieren der Schutzelemente 26, 28 weisen diese eine hakenförmige Arretierausnehmung 90 auf, die in der Schutzposition 22 der Schutzelemente 26, 28 in das bolzenförmige Arretiermittel 86 einrasten.

Mittels des Federelements 88 ist das bolzenförmige Arretiermittel 86 drehbar gelagert, so dass die Arretierung in einem ausgeschalteten Betriebszustand der Tischkreissäge 12 durch ein nicht näher dargestelltes Betätigungselement gelöst werden kann. Die Schutzelemente 26, 28 der einzelnen Schutzeinheiten 18, 20 können daraufhin wieder in der oberen Werkzeugabdeckung 24 mittels des Spannmittels bzw. der Federmittel 76 verspannt werden. Hierzu werden die Schutzelemente 26, 28 von einem Bediener um die Lagereinheit 70 in die obere Werkzeugabdeckung 24 eingeklappt. Dabei werden die Federmittel 76, die sich mit dem Halteelement 78 an der oberen Werkzeugabdeckung 24 abstützen, in eine vorgespannte Position gebracht. Eine Befestigung der Schutzelemente 26, 28 in der oberen Werkzeugabdeckung 24 wird durch die magnetische Halterung 74 bewirkt.

Befindet sich ein zu bearbeitendes Werkstück 84 im Sägebereich des Werkzeugs 14, wird eine Bewegung einzelner Schutzelemente 28 in die Schutzposition 22 von dem Werkstück 84 blockiert (Figur 3). Hierzu sind die einzelnen Schutzelemente 26, 28 unabhängig voneinander bewegbar an der Lagereinheit 70 angeordnet und zusätzlich durch die Mitnahmeelemente 80 lösbar miteinander verbunden, so dass bei einem Blockieren eines Schutzelements 28 bzw. mehrerer Schutzelemente 28 durch das Werkstück 84 sich das blockierte Schutzelement 28 bzw. die blockierten Schutzelemente 28 von den unblockierten Schutzelementen 26, 28 lösen. Die unblockierten Schutzelemente 26, 28 bilden im Bereich der Schneidkante 60 um das Werkstück 84 eine beidseitige, parallel zu Haupterstreckungsfläche 66 des Werkzeugs 14 angeordnete Verschalung des Werkzeugs 14 bzw. der Schneidkante 60 des Werkzeugs 14. Zusätzlich ermöglichen die blockierten Schutzelemente 28 ein Weiterbearbeiten des Werkstücks 84 mit dem Werkzeug 14.

## Patentansprüche

1. Schutzvorrichtung, insbesondere für Tischkreissägen (12) mit einem Werkzeug (14), das von einem rotierenden scheibenförmigen Sägewerkzeug gebildet ist, mit wenigstens einer Aktoreinheit (16) und zumindest einer Schutzeinheit (18, 20), wobei die Aktoreinheit (16) dazu vorgesehen ist, die Schutzeinheit (18, 20) in eine Schutzposition (22) am Werkzeug (14) zu bewegen, **gekennzeichnet durch** eine Lagereinheit (70), die mehrere lamellenartige, unabhängig voneinander bewegbar angeordnete Schutzelemente (26, 28) der Schutzeinheit (18, 20) in zumindest eine Bewegungsrichtung (38) lagert, die von einem rotierenden und scheibenförmigen Werkzeug (14) wegführt.

2. Schutzvorrichtung nach Anspruch 1, **gekennzeichnet durch** eine obere Werkzeugabdeckung (24), in der die Schutzeinheit (18, 20) angeordnet ist.

3. Schutzvorrichtung nach Anspruch 1 oder 2, **dadurch gekennzeichnet, dass** die Schutzeinheit (18, 20) mehrere nebeneinander angeordnete Schutzelemente (26, 28) aufweist.

4. Schutzvorrichtung nach einem der vorhergehenden Ansprüche, **dadurch gekennzeichnet, dass** die Aktoreinheit (16) zumindest ein Spannmittel aufweist, das die Schutzeinheit (18, 20) in zumindest einer Betriebsposition (32) vorspannt.

5. Schutzvorrichtung nach Anspruch 4, **dadurch gekennzeichnet, dass** das Spannmittel von einem Federmittel (76) gebildet ist.

6. Schutzvorrichtung nach einem der vorhergehenden Ansprüche, **dadurch gekennzeichnet, dass** die Aktoreinheit (16) zumindest eine Sensoreinheit (34) aufweist.

7. Schutzvorrichtung nach einem der vorhergehenden Ansprüche, **dadurch gekennzeichnet, dass** die Aktoreinheit (16) zumindest eine Arretiereinheit (36) aufweist, die die Schutzeinheit (18, 20) in der Schutzposition (22) arretiert.

8. Schutzvorrichtung nach Anspruch 7, **dadurch gekennzeichnet, dass** die Arretiereinheit (36) innerhalb einer oberen Werkzeugabdeckung (24) angeordnet ist.

## Claims

1. Protective device, in particular for table circular saws (12) having a tool (14) which is formed by a rotating disc-shaped sawing tool, comprising at least one actuator unit (16) and at least one protective unit (18, 20), wherein the actuator unit (16) is intended to move the protective unit (18, 20) into a protective position (22) on the tool (14), **characterized by** a bearing unit (70) which supports a plurality of lamella-like protective elements (26, 28) of the protective unit (18, 20), which are arranged so as to be movable independently of one another, in at least one direction of movement (38) which leads away from a rotating and disc-shaped tool (14).

2. Protective device according to Claim 1, **characterized by** an upper tool cover (24) in which the protective unit (18, 20) is arranged.

3. Protective device according to Claim 1 or 2, **characterized in that** the protective unit (18, 20) comprises a plurality of protective elements (26, 28) which are arranged next to one another.

4. Protective device according to one of the preceding claims, **characterized in that** the actuator unit (16) comprises at least one tensioning means which pretensions the protective unit (18, 20) in at least one operating position (32).

5. Protective device according to Claim 4, **characterized in that** the tensioning means is formed by a spring means (76).

6. Protective device according to one of the preceding claims, **characterized in that** the actuator unit (16) comprises at least one sensor unit (34).

7. Protective device according to one of the preceding claims, **characterized in that** the actuator unit (16) comprises at least one locking unit (36) which locks the protective unit (18, 20) in the protective position (22).

8. Protective device according to Claim 7, **characterized in that** the locking unit (36) is arranged inside an upper tool cover (24).

## Revendications

1. Dispositif de protection, en particulier pour des scies circulaires à table de menuisier (12), comprenant un outil (14), qui est formé par un outil de sciage en forme de disque rotatif, avec au moins une unité d'actionneur (16) et au moins une unité de protection (18, 20), l'unité d'actionneur (16) étant prévue pour déplacer l'unité de protection (18, 20) dans une position de protection (22) sur l'outil (14), **caractérisé par** une unité de support (70), qui supporte plusieurs éléments de protection (26, 28) de type lamelles de l'unité de protection (18, 20) disposés de manière déplaçable indépendamment les uns des autres, dans au moins une direction de déplacement (38) qui conduit à l'écart d'un outil rotatif et en forme de disque (14).

2. Dispositif de protection selon la revendication 1, **caractérisé par** un recouvrement d'outil supérieur (24) dans lequel est disposée l'unité de protection (18, 20).

3. Dispositif de protection selon la revendication 1 ou 2, **caractérisé en ce que** l'unité de protection (18, 20) présente plusieurs éléments de protection (26, 28) disposés les uns à côté des autres.

4. Dispositif selon l'une quelconque des revendications précédentes, **caractérisé en ce que** l'unité d'actionneur (16) présente au moins un moyen de serrage qui précontraint l'unité de protection (18, 20) dans au moins une position de fonctionnement (32).

5. Dispositif de protection selon la revendication 4, **caractérisé en ce que** le moyen de serrage est formé par un moyen de ressort (76).

6. Dispositif de protection selon l'une quelconque des revendications précédentes, **caractérisé en ce que** l'unité d'actionneur (16) présente au moins une unité de capteur (34).

7. Dispositif de protection selon l'une quelconque des revendications précédentes, **caractérisé en ce que** l'unité d'actionneur (16) présente au moins une unité de blocage (36) qui bloque l'unité de protection (18, 20) dans la position de protection (22).

8. Dispositif de protection selon la revendication 7, **caractérisé en ce que** l'unité de blocage (36) est disposée à l'intérieur d'un recouvrement d'outil supérieur (24).
